# EUROPEAN PATENT APPLICATION

(11) **EP 1 854 846 A1**
(43) Date of publication of application: **14.11.2007**
(21) Application number: 07107568.3
(22) Date of filing: 04.05.2007
(51) Int. Cl.: C08L 81/06, C08L 23/00

(54) **Polymer blends comprising a polysulfone and a modified polyolefin, and methods for their preparation**

(30) Priority: 08.05.2006 IN MU07092006
(71) Applicant: SOLVAY SPECIALITIES INDIA PRIVATE LIMITED, Nariman Point MUMBAI 400021 (IN)
(72) Inventor: Trivedi, Prakash Druman, 480025, Mumbai (IN); Raja, Atul Ramaniklal, Mujmahuda 390020, Baroda (IN); Vyas, Bijal Kirtankumar, Satellite 380015, Ahmedabad (IN); Choudhary, Veena Taxila Apt. House No.11, Hauz Khas 110016, New Dehli (IN); Maiti, Saurindra Nath Taxila Apt. House No.11, Hauz Khas 110016, New Dehli (IN); Sangam, Smita, Campus, Hauz Khas 110016, New Dehli (IN); Bera, Sumanta, Campus, Hauz Khas 110016, New Dehli (IN)
(74) Representative: Jacques, Philippe

(57) **Abstract**

Polymer blend consisting of :
- a polysulfone (P1),
- a polyolefin (P2) grafted with a polar molecule,
- optionally in addition, a non-grafted polyolefin (P3), and
- optionally in addition, one or more ingredients other than the polysulfonc (P1), the polyolefin (P2) grafted with a polar molecule and the non-grafted polyolefin (P3).

## Description

### TECHNICAL FIELD

The present invention relates to polymer blends comprising a polysulfone and a modified polyolefin and to methods for their preparation

### BACKGROUND OF THE INVENTION

Blending is now well known in polymer technology to modify different polymer properties. Blending of specialty polymers, like polysulfones, polyethers, polyketones, though studied academically, is not commercially extensively exploited due to difficulty in preparation of suitable blends. This is particularly true of commercially available polyethersulfone (PES) and polyphenylsulfone (PPSU).

Polysulfones are characterized by the presence of the sulfone group as part of their characteristic repeat units. These ones have also an ether group and aromatic rings, and possibly further comprise some other specific groups like isopropylidene. Then, polysulfones are commonly defined by the skilled in the art as polymers of which more than 50 wt. % of the repeat units are repeat units (R) comprising at least one sulfone group (-SO₂-), at least one ether group, and aromatic rings, where the repeat units (R) are the polysulfone characteristic repeat units.

The polysulfone may comprise repeat units other than repeat units (R), such as polyetheretherketone repeat units. Alternatively, all the polysulfone repeat units may be repeat units (R).

Non limitative examples of polysulfones are listed below, together with the chemical formula of their repeat units :
- bisphenol A polysulfone (PSU), the repeat units of which are : 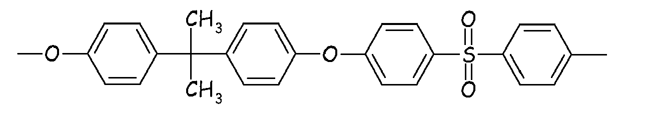
- polyethersulfone (PES), the repeat units of which are : 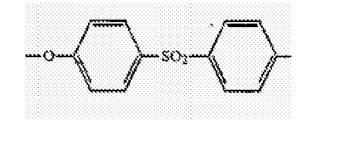
- polyphenylsulfone (PPSU), the repeat units of which are :

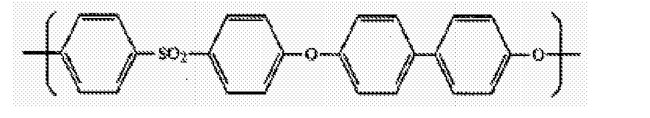

The PSU polysulfone (or bisphenol A polysuflone) was discovered in early 1960 at Union Carbide (U.S. Patent No. 4,108,837, 1978). Since then, commercialization of many polysulfones has taken place and some have also been discontinued from production. The activity in improving the quality of polysulfones has remained strong and improvements are sought continuously over the years in color, thermal stability, molecular weights, processibility, impact strength and cost.

The commercially available polysulfones have high temperature resistance and do not degrade or discolor at their processing temperatures, typically of from 320° to 380°C. Additionally, they are transparent, light amber colored amorphous plastics with excellent mechanical and electrical properties, and good chemical and flame resistance. They are processible using common plastics processing techniques such as injection molding, compression molding, blow molding and extrusion. This makes them very versatile and useful plastics, having a myriad of applications in medical, electrical, electronics, food processing, etc.

Polyethylene, in particular high-density polyethylene (HDPE), and polypropylene (PP) are commodity plastics belonging to the class of polyolefins. High-density polyethylene has a density of greater or equal to 0.940 g/cm³. HDPE has a low degree of branching and thus stronger intermolecular forces. This low degree of branching results in a more closely packed structure with a higher density.

The blending of two or more polymers to achieve unique property combinations of the parent polymers continues to be an attractive way to tailor existing commercial polymers to specific end use requirements. The blending of polysulfones with other polymers presents opportunities, but at the same time poses some significant technical challenges because of miscibility problems of polar polysulfones with any non-polar polymers like polyolefins.

In many cases, the main aim of blending polymers is to improve impact strength of the engineering thermoplastics so that the additive absorbs enhanced energy before fracture, hence broadening the scope of applications. Work has been carried out for blending of polysulfones with polar polymers like ABS, PET, PC and polyamides, etc. However, hardly any report is available on the blending of polysulfones with semi-crystalline commodity plastics such as HDPE or PP with attractive features such as high impact strength, good chemical resistance and easy processibility.

Some recent patents give indications of blending of PSU polysulfone family of blends, whereby PSU/ABS, PSU/PC, PSU/PET, PSU/PA, PSU/PEI, PSU/PPSU, PSU/PEEK, etc., are prepared and some of these are now commercially available.

Thus, Utracki (Commercial Polymer Blends, Chapman & Hall, 1998) has surveyed many blends comprising PSU polysulfone as a first component, and an engineering plastic like ABS, various polystyrenics, PC, PET, as another component. The role of PSU was to increase the high temperature resistance, while the second component was used to improve a specific property like impact strength or flow, and also to help to reduce the overall cost when compared to PSU itself. A compatibilizer like phenoxy, SMA copolymer or EVA-GMA copolymer was used to obtain useful blends.

US patent 3 472 810 (1969) teaches about the preparation of blends comprising PSU polysulfone and polyethylene (PE) or polypropylene (PP), with additional mineral oil for preventing delamination, with a PE or PP content of above 3-5 % by weight. It shows a moderate improvement of impact properties when PE is added up to 10 %. While this patent teaches about compositions of PSU and PE or PP with mineral oil added, there are severe limitations to this method. First, it is possible to add only 10 % maximum PE or PP to PSU polysulfone using this art. Second, when more than 3 % PE or PP are used, adding mineral oil becomes mandatory to prevent delamination and improve product properties. This addition of mineral oil is generally detrimental, as PSU polysulfone is a high temperature resistant polymer : mineral oil, which does not mix with it, tends to migrate out at higher temperatures. Third, even after adding mineral oil in PSU/PE or PP blend, the increase in impact strength is only about 30 - 55 % of PSU polysulfone.

T. Hyen and N. Lee have reported (Bull. Korean Chem. Soc. 2003, Vol. 24, No.12) the melt grafting of grafting polar groups of a specific type, namely hindered phenol groups, on polypropylene. This paper teaches us, how the reactive antioxidants are grafted onto polypropylene (PP) by melt processing with free radical initiators in a mini-max moulder.

T. Nunes Pires et.al. (J. Braz. Chem. Soc., Vol.10, No. 1, 31-34, 1999.) have studied solution grafting of maleic anhydride onto ethylene-propylenediene (EPDM) rubber by using dibenzoyl peroxide as peroxy initiator. Synthesis of PP-g-MA and its effects on the properties of glass fiber reinforced nylon 6/polypropylene blends was studied by S. Fellahi and N. Abacha (Polymer International, Vol.54, No. 6, 2005,909). In this study, PP was first functionalized by maleic anhydride in presence of dicumyl peroxide and then used as a compatibilizer in nylon 6/PP blend. Impact strength increased from 22 to 26 kJ/m² at 5 weight % loading of the PP-g-MA.

### OBJECT OF THE INVENTION

The present invention obviates the aforesaid drawbacks by providing a polymer blend comprising a polysulfone (including but not limited to PSU, PES and PPSU), and a polyolefin of a specific type (including but not limited to polyethylene, polypropylene or polybutylene), namely a polyolefin modified by grafting a polar molecule, such as maleic anhydride, to the polyolefin.

The invented polymer blend exhibits surprisingly a much higher impact strength than that of the corresponding polysulfone. In the invented blend, the presence of mineral oil is no more required ; because of the drawbacks generally caused by the presence of mineral oil, the presently invented blend is advantageously free of such mineral oil.

### SUMMARY OF THE INVENTION

In one aspect, the present invention concerns a polymer blend consisting of:
- a polysulfone (P1),
- a polyolefin (P2) grafted with a polar molecule,
- optionally in addition, a non-grafted polyolefin (P3), and
- optionally in addition, one or more ingredients other than the polysulfone (P1), the polyolefin grafted with a polar molecule (2) and the non-grafted polyolefin (P3).

The polysulfone (P1) is preferably selected from the group consisting of bisphenol A polysulfone, polyethersulfone and polyphenylsulfone.

The polyolefin (P2) grafted with a polar molecule is preferably a polyolefin grafted with maleic anhydride. Besides, it is preferably selected from the group consisting of low LDPE, LLDPE, HDPE, PP, EPR and EPDM, and polybutylene, all of them being grafted with a polar molecule. Very preferably, the polyolefin (P2) grafted with a polar molecule is maleic anhydride-grafted HDPE or maleic anhydride-grafted PP.

The polymer blend may consist of the polysulfone (P1) and the polyolefin (P2) grafted with a polar molecule. The case being, the polysulfone (P1) is comprised in the polymer blend in a weight amount of from 98 % to 48 %, based on the weight of the polymer blend.

The polymer blend may also consist of the polysulfone (P1), the polyolefin (P2) grafted with a polar molecule, and one more ingredients other than the polysulfone (P1), the polyolefin grafted with a polar molecule (P2) and the non-grafted polyolefin (P3). Such ingredient(s) may be notably selected from the group consisting of phosphate heat stabilizers, lubricants and colorants.

The polymer blend may also consist of the polysulfone (P1), the polyolefin (P2) grafted with a polar molecule and the non-grafted polyolefin (P3).

Finally, the polymer blend also consist of the polysulfone (P1), the polyolefin (P2) grafted with a polar molecule, the non-grafted polyolefin (P3), and one more ingredients other than the polysulfone (P1), the polyolefin (P2) grafted with a polar molecule and the non-grafted polyolefin (P3).

Another aspect of the present invention concerns the use of the polyolefin (P2) grafted with a polar molecule as compatibilizer between the polysulfone (P1) and the non-grafted polyolefin (P3) in the polymer blend as described in the last but one paragraph or as described in the last paragraph.

Still another aspect of the present invention concerns a method for increasing the impact strength of a polysulfone (P1), which comprises blending the polysulfone (P1) with a polyolefin (P2) grafted with a polar molecule. In this method, the polyolefin (P2) grafted with a polar molecule is preferably a polyolefin (P2) grafted with maleic anhydride ; besides, it is preferably selected from the group consisting of low LDPE, LLDPE, HDPE, PP, EPR and EPDM, and polybutylene, all of them being grafted with a polar molecule.

Still another aspect of the present invention concerns a method for preparing the polymer blend as above described, which comprises :
- grafting the polar molecule to a non-grafted polyolefin, so as to obtain the grafted polyolefin (P2), then,
- blending the grafted polyolefin (P2) with the polysulfone (P1) using an extrusion process.

In this method of preparation, a free radical initiator is preferably used to achieve the grafting. The polysulfone (P1) may be used notably in the form of powder or granules ; it is preferably used in the form of powder.

A last aspect of the present invention concerns another method for preparing the polymer blend as above described, which comprises extruding the polysulfone (P1), the polar molecule, a non-grafted polyolefin and a free radical initiator in an extruder in a single pass, during which (i) the grafted polyolefin (P2) is formed, and (ii) it is simultaneously blended with the polysulfone (P1).

### DETAILED DESCRIPTION OF THE INVENTION

Amounts of the polysulfone (P1), the polyolefin (P2) grafted with a polar molecule, the optional non-grafted polyolefin (P3) and the optional ingredients other than (P1), (P2) and (P3).

The weight of the polysulfone (P1), based on the weight of the polymer blend, is generally of at least 10 %. It is preferably of at least 20 %, and more preferably of at least 40 %. It may be of at least 50 %, at least 60 %, at least 70 %, 75 %, at least 80 %, at least 85 %, at least 90 % or at least 95 %.

Besides, the weight of the polysulfone (P1), based on the weight of the polymer blend, is generally of at most 99 %. It is preferably of at most 97 %, and more preferably of at most 95 %.

The weight of the polyolefin (P2) grafted with a polar molecule, based on the weight of the polymer blend, is generally of at least 0.5 %. It is preferably of at least 1.25 %, more preferably of at least 2.5 %, and still more preferably of at least 5 %. It may be of at least 7.5 %, at least 10 %, at least 12.5 % or at least 15 %.

Besides, the weight of the polyolefin (P2) grafted with a polar molecule, based on the weight of the polymer blend, is generally of at most 55 %, preferably of at most 30 % and more preferably of at most 15 %. It may be of at most 12.5 %, at most 10 %, at most 7.5 %, at most 5 % or at most 2.5 %.

The polymer blend may be free of the non-grafted polyolefin (P3). Alternatively, it may contain the non-grafted polyolefin (P3) in a weight amount, based on the weight of the polymer blend, ranging generally from 1 % to 55 %. In certain embodiments of the present invention, to which the preference may be given, the weight of the non-grafted polyolefin (P3), based on the weight of the polymer blend, is of at least 3.75 %, at least 5 %, at least 7.5 %, at least 10 %, at least 15 %, at least 20 %, at least 25 %, at least 30 % or at least 35 %. Besides, the weight of the non-grafted polyolefin (P3), based on the weight of the polymer blend, is preferably of at most 45 %, more preferably of at most 37.5 % ; it may be of at most 35 %, at most 30 %, at most 25 %, at most 20 %, at most 15 %, at most 10 % or at most 5 %.

The combined weight of the polyolefin (P2) grafted with a polar molecule and the non-grafted polyolefin (P3) [i.e. (P2)+(P3)], based on the combined weight of the polysulfone (P1), the polyolefin (P2) grafted with a polar molecule and the non-grafted polyolefin (P3) [i.e. (P1)+(P2)+(P3)], is generally of at least 0.5 %. It is preferably of at least 1.25 %, more preferably of at least 2.5 %, and still more preferably of at least 5 %. It may be of at least 10 %, at least 10 %, at least 20 %, at least 30 %, at least 35 % or at least 40 %.

Besides, the combined weight of the polyolefin (P2) grafted with a polar molecule and the non-grafted polyolefin (P3) [i.e. (P2)+(P3)], based on the combibed weight of the polysulfone (P1), the polyolefin (P2) grafted with a polar molecule and the non-grafted polyolefin (P3) [i.e. (P1)+(P2)+(P3)], is generally of at most 65 %, preferably of at most 50 % and more preferably of at most 35 %. It may be of at most 30 %, at most 20 %, at most 10 % or at most 5 %.

The weight of the polyolefin (P2) grafted with a polar molecule, based on the combined weight of the polyolefin (P2) grafted with a polar molecule and the non-grafted polyolefin (P3) [i.e. (P2)+(P3)], is generally of at least 5 %. It is preferably of at least 10 %, more preferably of at least 15 %, and still more preferably of at least 20 %. It may be of at least 25 %, at least 30 %, at least 50 %, and may be equal to about 100 %.

Besides, in certain embodiments of the present invention to which the preference may be given, the weight of the polyolefin (P2) grafted with a polar molecule, based on the combined weight of the polyolefin (P2) grafted with a polar molecule and the non-grafted polyolefin (P3) [i.e. (P2)+(P3)], may be of at most 50 %, at most 35 % or at most 30 %.

The polymer blend may be free of ingredients other than the polysulfone (P1), the polyolefin (P2) grafted with a polar molecule and the non-grafted polyolefin (P3). Alternatively, it may contain one or more of such ingredients in a weight amount, based on the weight of the polymer blend, which generally does not exceed 50 %, preferably does not exceed 30 % and more preferably does not exceed 10 %. The polymer blend may contain at most 7.5 %, 5 %, 2 % or 1 % of ingredients other than (P1), (P2) and (P3). The polymer blend may also contain at least 1 %, at least 2 %, at least 5 % or at least 7.5 % of ingredients other than (P1), (P2) and (P3).

### The polysulfone (P1)

The polysulfone (P1) is generally a polymer, typically a polycondensate, of which more than 50 wt. % of the repeat units are repeat units (R) comprising at least one sulfone group (-SO₂-), at least one ether group (-O-), and aromatic rings.

The sulfone group [-S(=O)₂ -] is usually in-between two phenylene groups as in the formula below :

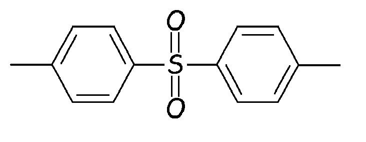

The polysulfone (P1) comprises preferably above 90 wt. % of repeat units (R). More preferably, the polysulfone (P1) contains repeat units (R) as sole repeat units.

A preferred polysulfone (P1) is a poly(biphenyl ether sulfone), such as a polyphenylsulfone. As used herein, the term "poly(biphenyl ether sulfone)" is intended to denote any polymer, generally a polycondensate, of which more than 50 wt. % of the repeat units are repeat units (R2) of one or more formulae containing at least one p-biphenylene group : 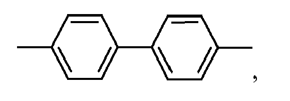 at least one ether group (-O-) and at least one sulfone group (-SO₂-).

Preferably, repeat units (R2) are repeat units of one or more formulae of the general type : 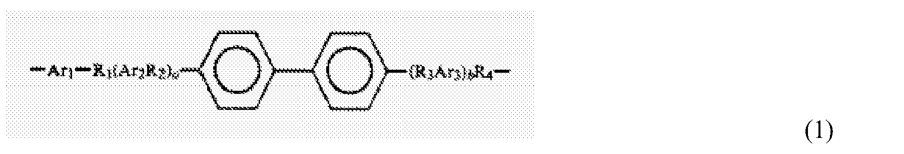 wherein R₁ through R₄ are -O-, -SO₂-, -S-, -CO-, with the proviso that at least one of R₁ through R₄ is -SO₂- and at least one of R₁ through R₄ is -O- ; Ar₁, Ar₂ and Ar₃ are arylene groups containing 6 to 24 carbon atoms, and are preferably phenylene or p-biphenylene; and a and b are either 0 or 1.

More preferably, repeat units (R2) are chosen from 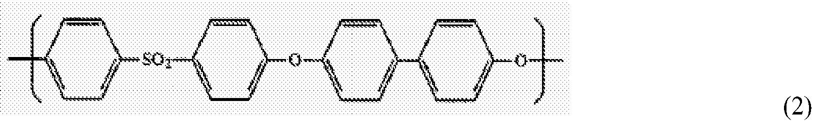 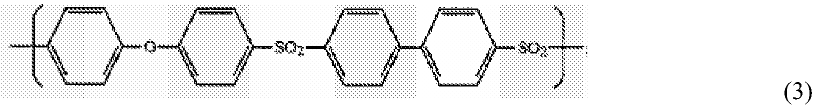 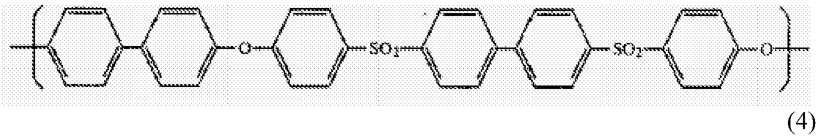 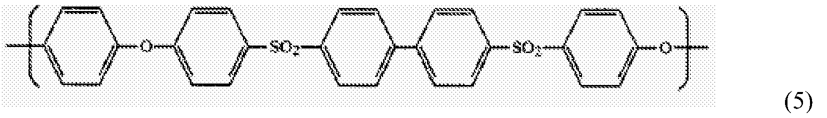 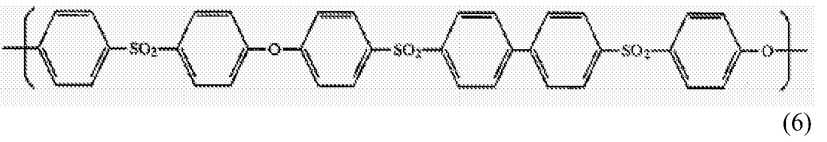 and mixtures thereof.

Still more preferably, repeat units (R2) are either 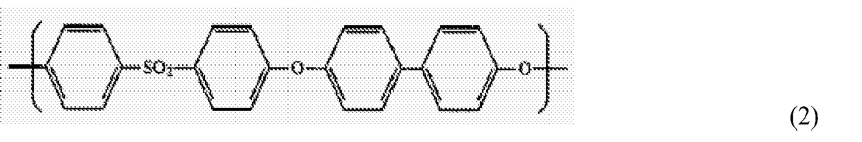 or 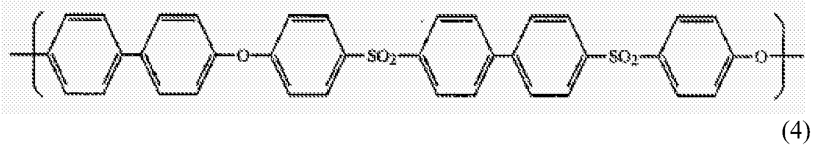 or a mix of 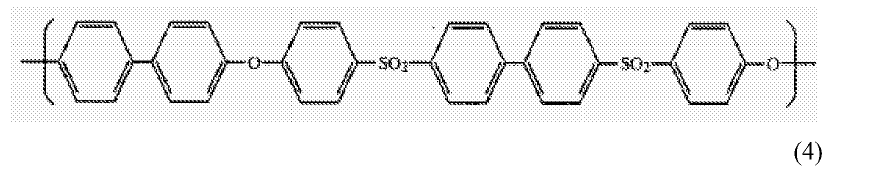 with 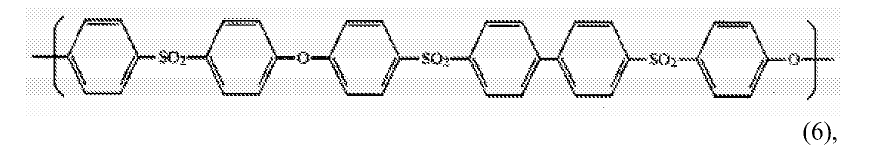 wherein the weight amount of the repeat units (6) contained in the mix, based on the total amount of the repeat units (4) and (6) of which the mix consists, is between 10 and 99 %, and preferably between 50 and 95 %.

On one hand, using repeat units (2) as repeat units (R2) provides in general the best overall cost-properties balance, and the highest level of toughness. For the purpose of the present invention, a polyphenylsulfone is intended to denote any polycondensation polymer of which more than 50 wt. % of the repeat units are repeat units (R2) of formula (2).

The poly(biphenyl ether sulfone) may be notably a homopolymer, a random, alternating or block copolymer. When the poly(biphenyl ether sulfone) is a copolymer, its repeat units may notably be composed of (i) repeat units (R2) of at least two different formulae chosen from formulae (2) to (6), or (ii) repeat units (R2) of one or more formulae (2) to (6) (especially, repeat units of formula (2)) and repeat units (R2*), different from repeat units (R2), such as : 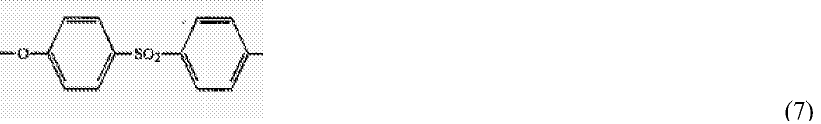 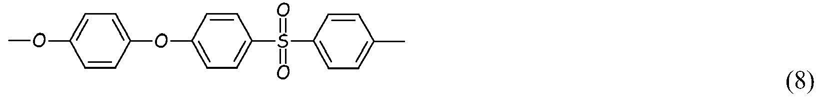 and

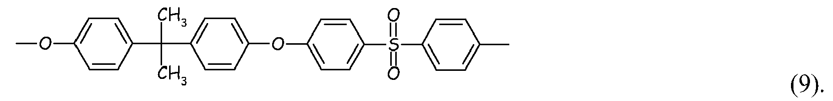

Preferably more than 70 wt. %, more preferably more than 85 wt. % of the repeat units of the poly(biphenyl ether sulfone) are repeat units (R2). Still more preferably, essentially all the repeat units of the poly(biphenyl ether sulfone) are repeat units (R2). Most preferably, all the repeat units of the poly(biphenyl ether sulfone) are repeat units (R2).

Excellent results are in general obtained when the poly(biphenyl ether sulfone) is a polyphenylsulfone homopolymer, i.e. a polymer of which essentially all, if not all, the repeat units are of formula (2). RADEL^{®} R polyphenylsulfone from Solvay Advanced Polymers, L.L.C. is an example of a polyphenylsulfone homopolymer.

In a certain embodiment of the present invention, the poly(biphenyl ether sulfone) is a polyphenylsulfone homopolymer.

The polysulfone (P1) may also differ from a poly(biphenyl ether sulfone).

Another preferred polysulfone (P1) is chosen from polyethersulfones, polyetherethersulfones and bisphenol A polysulfones.

Blends composed of at least one poly(biphenyl ether sulfone) and at least one polysulfone other than a poly(biphenyl ether sulfone) can also be used.

In a certain embodiment of the present invention, the polysulfone (P1) is a polyethersulfone.

To the purpose of the present invention, a polyethersulfone is intended to denote any polymer of which more than 50 wt. % of the repeat units are repeat units (R3) of formula :

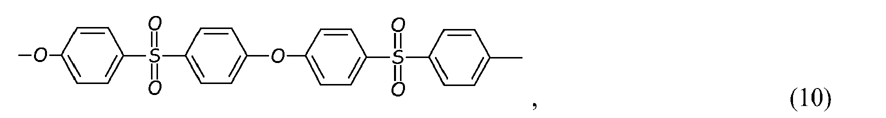

The polyethersulfone may be notably a homopolymer, or a copolymer such as a random or a block copolymer. When the polyethersulfone is a copolymer, its repeat units are advantageously a mix of repeat units (R3) and of repeat units (R3*), different from repeat units (R3), such as : 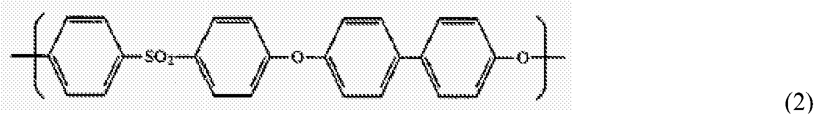 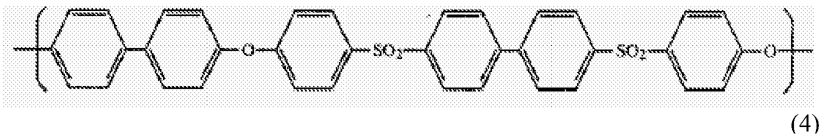 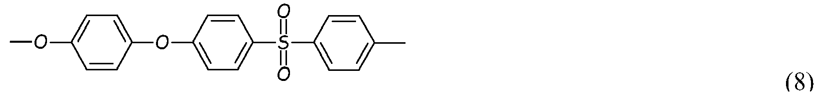 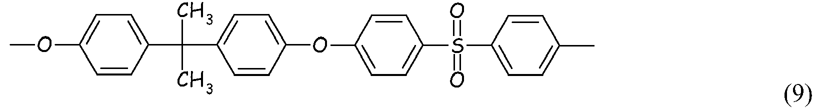 and mixtures thereof.

Preferably, the polyethersulfone is a homopolymer, or it is a copolymer the repeat units of which are a mix composed of repeat units (R3) of formula (10) and of repeat units (R3*) of formula (8), or it can also be a mix of the previously cited homopolymer and copolymer.

Polyethersulfones are commercially available notably from SOLVAY ADVANCED POLYMERS, L.L.C. as RADEL^{®} A.

In a certain other embodiment of the present invention, the polysulfone (P1) is a polyetherethersulfone.

To the purpose of the present invention, a polyetherethersulfone is intended to denote any polymer of which more than 50 wt. % of the repeat units are repeat units (R4) of formula (8)

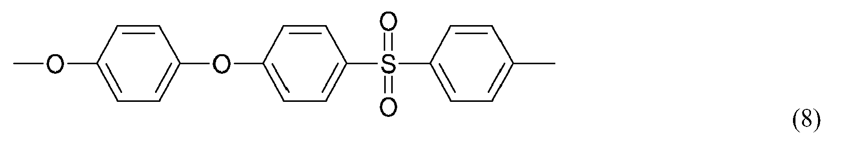

The polyetherethersulfone may be notably a homopolymer, or a copolymer such as a random or a block copolymer.

In a certain other embodiment of the present invention, the polysulfone (P1) is a bisphenol A polysulfone.

To the purpose of the present invention, a bisphenol A polysulfone is intended to denote any polymer of which more than 50 wt. % of the repeat units are repeat units (R5) of formula (9) :

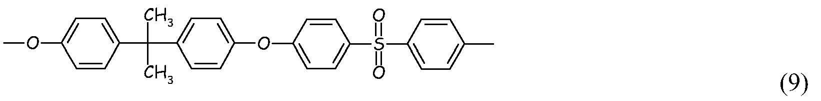

The bisphenol A polysulfone may comprise more than 75 wt. % or 90 wt. % of repeat units of formula (9).

The bisphenol A polysulfone may be a homopolymer of repeat units of formula (9), or it may be a copolymer such as a random or a block copolymer. When the bisphenol A polysulfone is a copolymer, its repeat units are advantageously a mix of repeat units (R5) and of repeat units (R5*), different from repeat units (R5), such as : 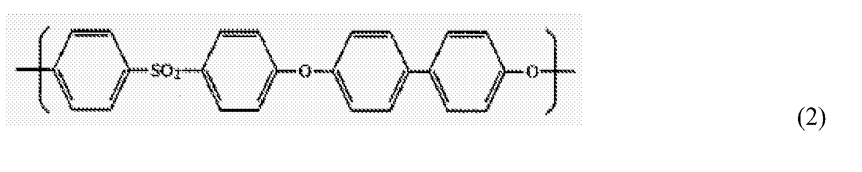 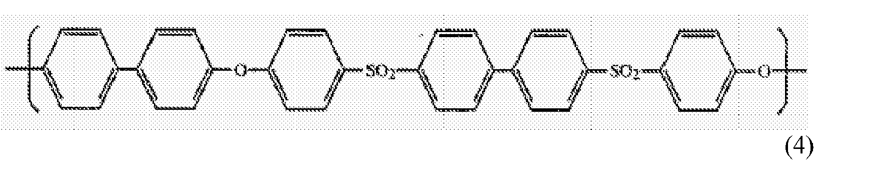 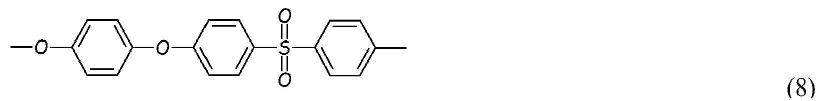 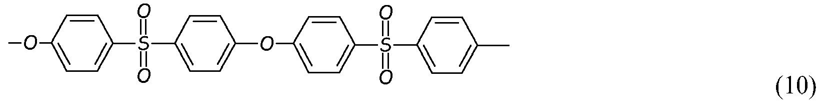 and mixtures thereof.

Preferably, the bisphenol A polysulfone is a homopolymer. Bisphenol A polysulfones are commercially available notably from SOLVAY ADVANCED POLYMERS, L.L.C. as UDEL^{®}.

### The polyolefin (P2) grafted with a polar molecule

The polyolefin (P2) is generally a polymer more than 50 % by weight of the repeat units of which are derived from at least one alkene.

Mention may be made, as examples of alkenes, of linear olefins comprising from 2 to 12 carbon atoms, such as ethylene, propylene, 1-butene, 1-pentene, 1-hexene, 1-heptene, 1-octene, 1-nonene, 1-decene, 1-undecene and 1-dodecene.

The polyolefins under consideration in the different aspects of the invention can be selected in particular from homopolymers of the abovementioned olefins and from copolymers of these olefins, in particular copolymers of propylene with one or more comonomers, and from blends of such polymers. The comonomers can be chosen in particular from the linear olefins described above, from styrene monomers, such as styrene and α-methylstyrene, and from alkadienes; however, the polyolefins under consideration in the different aspects of the invention are preferably devoid of repeat units derived from an alkadiene. The content by weight of units formed from the comonomers in the polyolefins is advantageously less than 30 % and preferably less than 10 % by weight. It is understood that the term "polyolefin" is intended equally well to denote the polymers described above taken in isolation as their blends.

The polyolefin (P2) is grafted with a polar molecule. Any polar molecule is suitable.

The polar molecule may notably be chosen from ethylenically unsaturated molecules containing at least one amide group, such as acrylamide and methacrylamide.

The polar molecule may notably be chosen from ethylenically unsaturated molecules containing at least one epoxy group such as allyl glycidyl ether.

The polar molecule may notably be chosen from ethylenically unsaturated molecules containing at least one hydroxy group such as allylic alcohol and 3-allyloxy-1,2-propanediol.

The polar molecule is preferably chosen from ethylenically unsaturated mono- or dicarboxylic acids and their derivatives and unsaturated anhydrides of mono- or dicarboxylic acids and their derivatives. These polar molecules preferably comprise from 3 to 20 carbon atoms. Mention may be made, as typical examples, of acrylic acid, methacrylic acid, maleic acid, fumaric acid, itaconic acid, crotonic acid, citraconic acid, maleic anhydride, itaconic anhydride, crotonic anhydride and citraconic anhydride. Maleic anhydride is very particularly preferred.

After grafting, the polar molecule is general left as such, so as to provide a polyolefin (P2) modified with acids and/or anhydrides functional groups. Yet, in a particular embodiment to which the preference is in general not given, the acids and/or anhydrides functional groups may be completely or partially neutralized by a neutralizing agent. The neutralizing agent can be an inorganic salt (such as sodium hydroxide), an organic salt (such as zinc acetate or sodium lactate),or also a mixture of an organic salt and of an inorganic salt.

The amount of the polar molecule grafted to the polyolefin (P2) is advantageously greater than 0.01 % by weight, with respect to the weight of the polyolefin (P2), preferably than 0.02 % by weight or better still than 0.03 % by weight. In addition, this amount is advantageously less than or equal to 20 % by weight, and preferably less than or equal to 10 % by weight. It may be of at most 5.0 %, 3.0 or 1.0 % by weight.

The grafting of the polar molecule is advantageously initiated by a radical-generating agent (also called, "radical initiator"). Mention may in particular be made, as radical-generating agent, of t-butyl cumyl peroxide, 1,3 -di(2-(t-butylperoxy)isopropyl)benzene, 2,5-dimethyl-2,5-di(t-butylperoxy)hexane, di(t-butyl) peroxide, 2,5-dimethyl-2,5-di(t-butylperoxy)-3-hexyne, and t-butyl peroxy benzoate. t-butyl peroxy benzoate makes it possible to synthesize grafted polyolefins which have given good results relating to the different aspects of the present invention.

The polyolefin (P2) may comprises little in the way of free (ungrafted) polar molecule, typically an amount of less than or equal to 500 ppm. To this end, the polyolefin (P2) may advantageously be purified of free polar molecule, preferably by entrainment with acetone, by stripping with hot air, by stripping with steam, by stripping with an inert gas or by degassing.

The polyolefin (P2) can in particular be a polyethylene.

The term "polyethylene" is understood to denote a polymer, more than 50 % by weight of the repeat units of which are derived from ethylene.

The polyethylenes under consideration in the different aspects of the invention can be selected in particular from ethylene homopolymers and from copolymers of ethylene with one or more comonomers, and also from blends of such polymers. The comonomers can be chosen in particular from the linear olefins described above, in particular propylene, from styrene monomers, such as styrene and α-methylstyrene, and from alkadienes; the polyethylenes are preferably devoid of repeat units derived from an alkadiene. The content by weight of units formed from the comonomers in the polyethylenes is advantageously less than 30 % by weight and preferably less than 10 % by weight. It is understood that the term "polyethylene" is intended equally well to denote the polyethylenes as described above taken in isolation as their blends.

The polyolefin (P2) is preferably a poly-α-olefin.

The term "poly-α-olefin" is understood to denote a polymer, more than 50 % by weight of the repeat units of which are derived from an α-olefin.

The term "α-olefin" is understood to denote an alkene comprising at least 3 carbon atoms. The α-olefin preferably comprises at most 12 carbon atoms. In addition, it is preferably linear.

The poly-α-olefins under consideration in the different aspects of the invention can be selected from homopolymers of an α-olefin and from copolymers of an α-olefin with one or more comonomers, and from blends of such polymers. The comonomers can be chosen in particular from the linear olefins described above, in particular ethylene, from styrene monomers, such as styrene and α-methylstyrene, and from alkadiene; the poly-α-olefins are preferably devoid of repeat units derived from an alkadiene. The content by weight of units formed from the comonomers in poly-α-olefins is advantageously less than 30 % by weight and preferably less than 10 % by weight. It is understood that the term "poly-α-olefin" is intended equally well to denote the poly-α-olefins as described above taken in isolation as their blends.

In a particularly preferred way, the polyolefin (P2) is a polypropylene. The term "polypropylene" is understood to denote a polymer, more than 50 % by weight of the repeat units of which are derived from propylene.

The polypropylenes under consideration in the different aspects of the invention can be selected from propylene homopolymers and from copolymers of propylene with one or more comonomers, and from blends of such polymers. The comonomers can be chosen in particular from the linear olefins described above, in particular ethylene, from styrene monomers, such as styrene and α-methylstyrene, and from alkadiene; the polypropylenes are preferably devoid of repeat units derived from an alkadiene. The content by weight of units formed from the comonomers in the polyethylenes is advantageously less than 30 % by weight and preferably less than 10 % by weight. It is understood that the term "polypropylene" is intended equally well to denote the polypropylenes as described above taken in isolation as their blends.

The polyolefin (P2) can in particular be a polyethylene. The polyolefin (P2) is preferably a poly-α-olefin. The polyolefin (P2) is particularly preferably a polypropylene.

### Optional ingredient : the non-grafted polyolefin (P3)

Except that it is non-grafted, the polyolefin (P3) complies advantageously with all the definitions and preferences relating to the grafted polyolefin (P2).

The polyolefin (P3) may be a polyethylene or a poly-α-olefin such as a polypropylene.

### Other optional ingredients

The polymer blend may optionally comprise one or more ingredients other than the polysulfone (P1), the polyolefin (P2) grafted with a polar molecule and the non-grafted polyolefin (P3).

The nature and amount of such ingredients is not an essential feature of the presently invented polymer blend.

The invented polymer blend may notably contain conventional ingredients of polysulfone and/or polyolefin blends, including lubricating agents, heat stabilizers such as phosphates, anti-static agents, extenders, organic and/or inorganic colorants and pigments like TiO₂, carbon black, acid scavengers, such as MgO, stabilizers, i.e., metal oxides and sulfides such as zinc oxide and zinc sulfide, antioxidants, flame retardants, smoke-suppressing agents, and particulate fillers and nucleating agents such as talc, mica, titanium dioxide, kaolin and the like.

It may be free of fibrous substances, or may contain one or more thereof, such as glass fiber and/or carbon fiber.

### CERTAIN PARTICULAR ASPECTS OF THE INVENTION

A particular aspect of the present invention concerns a polymer blend of a polysulfone and a polyolefin grafted with a polar molecule, the polysulfone being in an amount from 98 % to 48 % and the polyolefin grafted with a polar molecule forming the remaining of the polymer blend.

Another particular aspect of the present invention is to a polymer blend of a polysulfone with a polyolefin grafted with maleic anhydride.

Still another aspect particular of the present invention concerns a polymer blend of a polysulfone with a polyolefin (under the common sense of the term, i.e. a non-grafted polyolefin), and a polyolefin grafted with maleic anhydride, said grafted polyolefin acting advantageously as a compatibilizer.

Still another aspect particular aspect of the present invention concerns a method for increasing the impact strength of a polysulfone, which comprises blending the polysulfone with a polyolefin grafted with a polar molecule.

The polysulfones used in the present invention are commercially available products notably from SOLVAY SPECIALITIES INDIA PRIVATE Ltd. and from SOLVAY ADVANCED POLYMERS, L.L.C.

Polyolefins are well known in the art and are produced in millions of Mts every year. HDPE and PP are of particular interest, because they show very high impact resistance. These grades are readily available for lots of uses, including for improving impact properties of different polymers.

However, due to highly polar nature of polysulfones and highly non-polar nature of polyolefins, mixing them together leads to phase separation and property devaluation. Therefore, compatibilization is needed to improve the interfacial adhesion between the two classes of materials.

It has been found that the grafting of polar molecules, such as maleic anhydride, to polyolefins surprisingly acts as an adhesion improver for polysulfones and promotes the desired interfacial adhesion between the polysulfones and the polyolefins. HDPE or PP grafted with maleic Anhydride (MA), for example by reactive extrusion, thus, may serve as an efficient compatibilizer.

Maleic anhydride is a colorless to white solid that can be grafted onto a polyolefin under appropriate extrusion conditions to attach some polar groups onto the non-polar polyolefin.

In accordance with the present invention, the grafted polyolefin may be used for the compatibilization with a polysulfone either as such, or in combination with an additional non-grafted polyolefin. By a proper choice of the polyolefin, the quantity of the polar molecule (such as maleic anhydride), the processing conditions to graft the polar molecule and the processing conditions to blend the grafted polyolefin with the polysulfone, the Applicant has been able to prepare novel polymer blends, which show outstanding impact resistance as compared to that of the polysulfone alone.

The preparation of a grafted polyolefin is illustrated as follows. Polysulfone powder (or granules) may be mixed with MA, a free radical initiator, a polyolefin and, optionally in addition, a phosphate heat stabilizer and a lubricant, colorant, etc. in a high-speed mixer for a given time. The powdered mixture may then be extruded using a compounding extruder and be allowed to melt and react. Finally, it may be pelletized. Testing of the so prepared blend may be carried out by injection molding the specimen and following ASTM or ISO method for Izod impact tests.

An objective of the present invention is to prepare novel polymer blends comprising a polysulfones and a polyolefin grafted with a polar molecule, wherein the so obtained blend has higher impact resistance than the polysulfone taken alone.

Another objective of the present invention is to develop a process for blending a polysulfone with a grafted polyolefin to prepare a blend having a higher impact resistance than the polysulfone taken alone.

Another objective of the present invention is to graft a polar molecule such as maleic anhydride or an acrylic monomer, to a polyolefin to provide a grafted polyolefin having sufficient polarity for its compatibilization with a polysulfone.

Another objective of the present invention is to prepare such grafted polyolefin using a free radical initiator : the polyolefin (before grafting), the polar molecule, and the free radical initiator are reacted so as to obtain the grafted polyolefin. The free radical initiator is advantageously a peroxy compound, such as t-butyl peroxy benzoate.

Another objective of the present invention is to develop an in-situ process for grafting a polar molecule, such as maleic anhydride (MA), onto a polyolefin using either extrusion or solution process.

Another objective of the present invention is (i) to graft a polar molecule (such as maleic anhydride), to a polyolefin, so as to obtain a grafted polyolefin, then (ii) to blend the grafted polyolefin [obtained separately at step (i)] with a polysulfone using an extrusion process.

Yet, another objective of the present invention is to process for preparing a polymer blend comprising a polysulfone and a polyolefin grafted with a polar molecule (such as maleic anhydride), wherein the polysulfone, the polar molecule, a polyolefin and a free radical initiator are extruded in a single pass in an extruder, during which (i) the grafted polyolefin is being formed, and (ii) it is simultaneously blended with the polysulfone.

A last objective of the present invention is to the use of a polyolefin grafted with a polar molecule, such as maleic anhydride, as a compatibilizer in a blend comprising a polysulfone and a polyolefin (generally, an unmodified polyolefin).

The polysulfone may be selected from the group consisting of bisphenol A polysulfone, polyethersulfone and polyphenylsulfone.

The grafted polyolefin may be selected from the group consisting of low density polyethylene (LDPE), linear low density polyethylene (LLDPE), high density polyethylene (HDPE), polypropylene (PP), ethylene-propylene rubber (EPR), "ethylene propylene diene monomer" rubber (EPDM) and polybutylene, all of them being grafted with a polar molecule, in particular maleic anhydride.

### EXAMPLES (according the invention and to the contary)

Polysulfones used for in the experiments are as follows:
- GAFONE^{®} S 1500 bisphenol A polysulfone (PSU),
- GAFONE^{®} S 1500P PSU,
- GAFONE^{®} 3300 polyethersulfone (PES),
- GAFONE^{®} 3300P PES,
- GAFONE^{®} P 4300 polyphenylsulfone (PPSU),
- GAFONE^{®} P 4300P PPSU,
all from SOLVAY SPECIALITIES INDIA PRIVATE Ltd.

Polyolefins in the experiments are as follows :
- OPTIM^{®} TP004/2E maleic anhydride-grafted high density polyethylene (HDPE-g-MA) from Pluss Polymer, India,
- OPTIM^{®} p-405 maleic anhydride-grafted polypropylene (PP-g-MA), also from Pluss Polymer, India,
- HALENE^{®} P 5600 high density polyethylene (HDPE), from HALDIA CHEMICALS,
- G-Lex B55HM0003 HDPE, from Gas Authority of India Ltd.,
- RELENE^{®} F 56003 HDPE, from Reliance Ind. India.
- REPOL^{®} H0202EG polypropylene (PP), from Reliance Industries Ltd., India.

Maleic anhydride and t-butyl peroxybenzoate (peroxide initiator) were obtained from S.D. Fine Chemicals limited, Bombay.

The following examples are to illustrate the present invention, without limiting its scope in any manner.

### Example 1

PSU (GAFONE-S 1500), HDPE (G-Lex B55HM0003) and HDPE-g-MA (Optim TP004/2E) were taken in proportion of 95:3.75:1.25 for blend preparation. PSU and HDPE were pre-dried in oven at 1300C and 1000C for 3 hours respectively.

The melt blending of the sample prepared was carried out in a Berstorff ZE-25, a co-rotating twin screw extruder. The temperature of barrel was kept about 2700C to 3050C and screw rpm was 220. The strands coming out of the extruder were passed through a cooling water trough and pelletized. The pellets were dried at 1200C in hot air oven for 3 hours before injection molding.

The blend granules were injection molded using LTM Demag (DC-60 NC4K) injection molding machine. A screw rpm of 30, injection pressure of about 38 bars and cycle time of about 200 seconds was applied for the same. The barrel temperature was varied from about 2700C to 3050C. The mold temperature was maintained at about 1200C.

Notched Izod impact strength was measured using impact tester (Ceast Resil 25) according to ISO 180/1 a standard. The specimens had a notch angle of 450 and a notch depth of 2mm. The samples were conditioned at relative humidity of 65(+/- 2 %) at a temperature of 25(+/- 2 0C) for 48 hours before testing.

The Izod impact strength of this composition was 16.5 kJ/m2 as compared to 5.0 kJ/m2 of PSU itself.

### Example 2 - 6

Further PSU: HDPE: HDPE-g-MA polymer blends were prepared and tested according to Example 1 but in varying proportion as given in Table 1. PSU was used from 95 to 50 % loading. Following Table 1 gives the proportion of the polymers and the impact resistant values these blends compositions.

**TABLE 1**

| Examples | COMPOSITION PSU: HDPE: HDPE-g-MA | IMPACT STRENGTH |
|---|---|---|
| # | %Wt | kJ/m² |
| 1 | 95 : 3.75 : 1.25 | 16.5 |
| 2 | 90 : 7.5 : 2.5 | 19.6 |
| 3 | 80 : 15 : 5 | 13.6 |
| 4 | 70 : 22.5 : 7.5 | 13.3 |
| 5 | 65 : 26.25 : 6.75 | 9.1 |
| 6 | 50 : 37.5 : 12.5 | 8.0 |

### Example 7

HDPE-g-MA was separately prepared using following during extrusion.

HDPE (HALENE P 5600) granules 95 % (weight basis); Maleic anhydride 5 % (weight basis); and t-butyl peroxybenzoate 0.5 phr (per hundred ratio) basis were taken and MA and t-butyl peroxybenzoate were dissolved in 100 gm of acetone. The HDPE granules were wetted with this solution properly. Then, the acetone was evaporated by putting the granules in tray dryer at 60 °C for 3 hours.

The grafting of HDPE with MA was carried out in a Berstoff ZE-25, a co-rotating twin screw extruder. The temperature was varied from

1600 C in barrel to 1800 C in die zone with an ascent of about 50 C in zones from barrel to die. The screw rpm of 150 were maintained to give residence time of 90-120 seconds to the batch. The strands coming out of the extruder were passed through a cooling water bath and pelletized.

The HDPE-g-MA containing 5 % MA was further used as such preparing blends with polysulfones or as a compatibilizer for polysulfone & polyolefin blends.

### Example 8

PSU (GAFONE-S 1500) granules, HDPE (HALENE P 5600) and HDPE-g-MA prepared as per Example 7 in 85:10:5 weight proportion were taken for the polymer blend preparation. The same procedure as in example 1 was followed excepting it being blend of three materials.

Impact strength of this blend was found to be 9.4 kJ/m2.

### Example 9

PSU (GAFONE-S 1500P) powder, HDPE (HALENE P 5600) granules and HDPE-g-MA granules, prepared as per Example 8 in same proportion except using PSU powder instead of granules were taken for blend preparation. The same procedure for polymer blend preparation as in example 8 was followed.

Impact strength of this blend was found to be 11kJ/m2, which is higher as compared to same formulation carried out using granules. This shows better dispersion of grafted HDPE in case of PSU powder as compared to PSU granules.

### Example 10-12

PSU (GAFONE-S 1500) granules and HDPE-g-MA prepared as per Example 7 were chosen for the preparation of these polymer blends. The same procedure as in example 1 was followed, excepting it being blend of two materials with PSU 85 - 95 % and graft 15 -5 % by weight were taken.

Impact strength of these polymer blends are given in Table 2.

**TABLE 2**

| Examples | COMPOSITION PSU : HDPE-g-MA | IMPACT STRENGTH |
|---|---|---|
| # | %Wt | kJ/m² |
| 10 | 95:05 | 9.4 |
| 11 | 90:10 | 12.0 |
| 12 | 85:15 | 8.8 |

### Example 13

The following procedure was used to prepare the HDPE-g-MA graft while also simultaneously preparing polymer blend with PSU using extrusion procedure. PSU (1500P grade) 90 % weight, HDPE (HALENE P-5600) granules 10 % weight, Maleic anhydride 5 phr (per hundred part of total resin); and t-butyl peroxybenzoate 0.4 phr were taken in a high-speed mixture and mixed for 3 minutes.

The melt blending of the sample prepared was carried out using procedure as given in Example 1.

Impact strength of this blend was found to be 12 kJ/m², as compared to 5.0 kJ/m² of virgin PSU.

### Example 14

PSU (GAFONE-S 1400) 95 % weight and HDPE (G-Lex B55HM0003) 5 % weight polymer blend was prepared, without addition of a compatibilizer, using extrusion and test sample preparation process same as that mentioned in example 1.

Impact strength of this polymer blend was 8.7kJ/m2, when compared to 5.0 kJ/m² of PSU itself.

### Example 15 - 19

Further PSU: HDPE polymer blends were prepared and tested according to Example 14 except that HDPE (G-Lex B55HM0003) was used from 5 to 50 % loading. HDPE was used as such without grafting MA onto it. Following Table 3 gives the proportion of two polymers and the impact resistant values these blends registered:

**TABLE 3**

| Examples | PSU:HDPE % wt. | IMPACT STRENGTH kJ/m² |
|---|---|---|
| -- | 100 : 0 | 5 |
| 14 | 95 : 5 | 8.7 |
| 15 | 90 : 10 | 9.2 |
| 16 | 80: 20 | 9.4 |
| 17 | 70 : 30 | 11.0 |
| 18 | 65:35 | 8.1 |
| 19 | 50 :50 | 7.7 |

### Example 20

PES (GAFONE 3300) 95 % weight and HDPE (G-Lex B55HM0003) 5 % weight were chosen as materials and novel polymer blends were prepared using process as given in Example 1 except that PES substituted PSU.

Impact strength of this blend was found to be 7.7 kJ/m², when compared to 5.0 kJ/m² of PES.

### Example 21 - 23

The PES:HDPE blend was prepared and tested according to Example 20 except that HDPE (B55HM0003), was used from 5 to 50 % level. Following Table 4 gives the proportion of two polymers and the impact resistant values these blends gave.

**TABLE 4**

| Examples | COMPOSITION PES : HDPE | IMPACT STRENGTH |
|---|---|---|
| # | %Wt | kJ/m2 |
| -- | 100 : 0 | 5.0 |
| 20 | 95 : 5 | 7.7 |
| 21 | 75 : 25 | 8.1 |
| 22 | 60 : 40 | 7.5 |
| 23 | 50 : 50 | 4.1 |

### Example 24 - 27

The PES:HDPE polymer blends along with compatibilizer HDPE-g-MA were prepared and tested according to Example 20. HDPE (B55HM0003) 3.75 to 30 % level and HDPE-g-MA 1.25 to 10 % were further used with in various proportions. Following Table 5 gives the proportion of three polymers and the impact resistant values these blends gave.

**TABLE 5**

| Examples | COMPOSITION PES : HDPE : HDPE-g-MA | IMPACT STRENGTH |
|---|---|---|
| # | %Wt | kJ/m² |
| -- | 100:0:0 | 5.0 |
| 24 | 95 : 3.75 : 1.25 | 8.4 |
| 25 | 80 : 15 : 5 | 8.0 |
| 26 | 75 : 18.75 : 6.25 | 9.8 |
| 27 | 60 : 30 : 10 | 7.7 |

Again impact strength of all polymer blends showed higher values than that of neat PES.

### Example 28

The following procedure was used to prepare the PES:HDPE blend using extrusion procedure. PES (GAFONE 3300P) 90 % weight, HDPE (HALENE P-5600) 10 % weight; maleic anhydride 5 phr; and t-butyl peroxybenzoate 0.4 phr were taken in a high-speed mixture and mixed for 3 minutes.

The melt blending of the materials was carried out as done in Example 13, except that PES here substituted PSU.

Impact strength of this blend was found to be 7.3 kJ/m² as compared to that of virgin PES, which is 5.0 kJ/m².

### Example 29

The following procedure was used to prepare the PPSU: HDPE blend using extrusion procedure. PPSU (GAFONE-P 4300P) 90 % weight, HDPE (HALENE P-5600) 10 % weight; Maleic anhydride 5 phr and t-butyl peroxybenzoate 0.4 phr were taken in a high-speed mixture and mixed for 3 minutes. Rest of the procedure was the same as mentioned in example 13.

Impact strength of this blend was found to be 18.4 kJ/m², as compared to 12.0 kJ/m² of virgin PPSU.

### Example 30

PSU granules (GAFONE S 1400) 95 % weight and PP granules (REPOL H0202EG) 5 % weight were chosen as parent materials for blending. The rest of the procedure was similar to that of Example 14 except that PP was chosen in place of HDPE.

Impact strength of this blend was found to be 16.6 kJ/m² as compared to that of virgin PSU of 5.0 kJ/m².

### Example 31

Another PSU:PP polymer blend 90:10 weight % was prepared, as in Example 30, without Compatibilizer addition. Impact strength of this blend was found to be 14.4 kJ/m² as compared to impact strength of virgin PSU of 5.0 kJ/m².

### Example 32

PSU (GAFONE-S 1400) 95 %, PP (REPOL H0202EG) 3.75 % and PP-g-MA (OPTIM P-405) 1.25 % weight were taken as parent materials and a polymer blend was prepared and evaluated using procedure of Example 1.

Impact strength of this blend was found to be 19.6 kJ/m² as compared to that of virgin PSU having 5.0 kJ/m².

### Example 33

The new polymer blend was prepared using procedure of Example 32 except taking PSU 90: PP 7.5: PP-g-MA % by weight.

Impact strength of this blend was found to be 14.0 kJ/m² as compared to that of virgin PSU of 5.0 kJ/m².

### Example 34

PES (GAFONE 3300) 95 % and PP (Reliance H100EY) 5 % weight were chosen as parent materials and blending was carried out as in Example 20, excepting for PP substituting HDPE.

Impact strength of this blend was found to be 7.3 kJ/m² as compared to that of virgin PES having 5 kJ/m².

## Claims

1. - Polymer blend consisting of :
- a polysulfone (P1),
- a polyolefin (P2) grafted with a polar molecule,
- optionally in addition, a non-grafted polyolefin (P3), and
- optionally in addition, one or more ingredients other than the polysulfone (P1), the polyolefin (P2) grafted with a polar molecule and the non-grafted polyolefin (P3).

2. - Polymer blend as claimed in claim 1, wherein the polysulfone (P1) is selected from the group consisting of bisphenol A polysulfone, polyethersulfone and polyphenylsulfone.

3. - Polymer blend as claimed in claim 1 or 2, wherein the polyolefin (P2) grafted with a polar molecule is a polyolefin grafted with maleic anhydride.

4. - Polymer blend as claimed in any one of claims 1 to 3, wherein polyolefin (P2) grafted with a polar molecule is selected from the group consisting of low LDPE, LLDPE, HDPE, PP, EPR and EPDM, and polybutylene, all of them being grafted with a polar molecule.

5. - Polymer blend in any one of claims 1 to 3, wherein the polyolefin (P2) grafted with a polar molecule is maleic anhydride-grafted HDPE or maleic anhydride-grafted PP.

6. - Polymer blend as claimed in any one of claims 1 to 5, wherein it consists of the polysulfone (P1) and the polyolefin (P2) grafted with a polar molecule.

7. - Polymer blend as claimed in claim 6, wherein it comprises the polysulfone (P1) in a weight amount of from 98 % to 48 %, based on the weight of the polymer blend.

8. - Polymer blend as claimed in any one of claims 1 to 5, wherein it consists of :
- the polysulfone (P1),
- the polyolefin (P2) grafted with a polar molecule, and
- one more ingredients other than the polysulfone (P1), the polyolefin (P2) grafted with a polar molecule and the non-grafted polyolefin (P3).

9. - Polymer blend as claimed in claim 8, wherein the ingredient(s) other than the polysulfone (P1), the polyolefin (P2) grafted with a polar molecule and the non-grafted polyolefin (P3) is (are) selected from the group consisting of phosphate heat stabilizers, lubricants and colorants.

10. - Polymer blend as claimed in any one of claims 1 to 5, wherein it consists of the polysulfone (P1), the polyolefin (P2) grafted with a polar molecule and the non-grafted polyolefin (P3).

11. - Polymer blend as claimed in any one of claims 1 to 5, wherein it consists of :
- the polysulfone (P1),
- the polyolefin (P2) grafted with a polar molecule,
- the non-grafted polyolefin (P3), and
- one more ingredients other than the polysulfone (P1), the polyolefin (P2) grafted with a polar molecule and the non-grafted polyolefin (P3).

12. - Use of the polyolefin (P2) grafted with a polar molecule as compatibilizer between the polysulfone (P1) and the non-grafted polyolefin (P3) in the polymer blend as claimed in claim 10 or 11.

13. - Method for increasing the impact strength of a polysulfone (P1), which comprises blending the polysulfone (P1) with a polyolefin (P2) grafted with a polar molecule.

14. - Method as claimed in claim 13, wherein the polyolefin (P2) grafted with a polar molecule is a polyolefin grafted with maleic anhydride.

15. - Method as claimed in claim 13 or 14, wherein the polyolefin (P2) grafted with a polar molecule is selected from the group consisting of low LDPE, LLDPE, HDPE, PP, EPR and EPDM, and polybutylene, all of them being grafted with a polar molecule.

16. - Method for preparing the polymer blend as claimed in any one of claims 1 to 11, which comprises :
- grafting the polar molecule to a non-grafted polyolefin, so as to obtain the grafted polyolefin (P2), then,
- blending the grafted polyolefin (P2) with the polysulfone (P1) using an extrusion process.

17. - Method for preparing the polymer blend as claimed in claim 16, wherein a free radical initiator is used to achieve the grafting.

18. - Method for preparing the polymer blend as claimed in any one of claims 1 to 17, which comprises extruding the polysulfone (P1), the polar molecule, a non-grafted polyolefin and a free radical initiator in an extruder in a single pass, during which (i) the grafted polyolefin (P2) is formed, and (ii) it is simultaneously blended with the polysulfone (P1).
